# EUROPÄISCHE PATENTANMELDUNG

(11) **EP 2 323 236 A2**
(43) Veröffentlichungstag der Anmeldung: **18.05.2011**
(21) Anmeldenummer: 10013635.7
(22) Anmeldetag: 14.10.2010
(51) Int. Cl.: H02G 3/08, H02G 3/22

(54) **Kabeltrageinheit**

(30) Priorität: 12.11.2009 DE 102009060988
(71) Anmelder: icotek project GmbH & Co. KG, 73563 Mögglingen (DE)
(72) Erfinder: Ehmann, Bruno, 73563 Mögglingen (DE)
(74) Vertreter: Weitzel, Wolfgang

(57) **Zusammenfassung**

Die Erfindung betrifft eine Kabeltrageinheit mit den folgenden Bauteilen beziehungsweise Merkmalen:
- einem elastisch verformbaren Kabelhalter, umfassend eine Anzahl von Membranen, die von Kabeln durchstoßbar sind;
- im Betriebszustand ist der Kabelhalter mit Kabeln bestückt, die in den durchstoßenen Membranen unverlierbar gehalten sind;
- mit wenigstens zwei Rahmenteilen, die im Lose-Zustand lose einander zugeordnet, und im Betriebszustand fest miteinander verbunden sind;
- wenigstens ein Rahmenteil weist eine Aufnahmeöffnung zum Aufnehmen des Kabelhalters auf;
- im Betriebszustand ist der bestückte Kabelhalter in der Aufnahmeöffnung fest und dicht eingespannt;
- im Lose-Zustand ist der bestückte Kabelhalter in die Aufnahmeöffnung schubladenartig einsteckbar, und in eingestecktem Zustand kraftschlüssig unverlierbar gehalten.

## Beschreibung

Die Erfindung betrifft eine Kabeltrageinheit zum Tragen von Kabeln. Dabei ist das einzelne Kabel durch die Kabeltrageinheit hindurchgeführt. Es ist bekannt, die Kabel zunächst in sogenannte Zugentlastungen einzulegen. Dies sind elastische Körper, die eine Bohrung zum Aufnehmen des Kabels aufweisen. Die Zugentlastungen sind außerdem geschlitzt, sodass sie geöffnet werden können, um die Kabel einzulegen. Eine bekannte Kabeltrageinheit weist ferner zwei Rahmenteile auf. Wenigstens eines der Rahmenteile weist eine Aufnahmeöffnung zum Einlegen der mit Kabeln bestückten Zugentlastungen auf. Siehe EP 1 236 256 B.

WO 99/06747 A beschreibt eine Kabeltrageinheit, die zwei Stücke umfasst. Die Stücke haben jeweils halbkreisförmige Aussparungen, die in zusammengefügtem Zustand einen Vollkreis zur Aufnahme einer zylindrischen Zugentlastung bilden. Diese Art von Kabeltrageinheit hat den Nachteil, dass bei der Montage eines Kabels die Zugentlastung nur in eine der beiden halbkreisförmigen Aussparungen eingelegt wird. In dieser Position ist die Zugentlastung mit der Aussparung nicht zuverlässig verbunden. Will der Monteur weitere halbkreisförmige Aussparungen mit Zugentlastungen und mit von diesen umschlossenen Kabeln einlegen, so besteht die Gefahr, dass die zuvor eingelegte Zugentlastung wieder aus der halbkreisförmigen Aussparung heraus fällt.

DE 40 20 180 C beschreibt eine Kabeltrageinheit, bei welcher ringförmige Dichtelemente vorgesehen sind.

DE 36 19 183 betrifft eine Kabeldurchführung für einen Sicherungs- und Verteilerkasten für Kraftfahrzeuge. Dabei ist ein ortsfestes Aufnahmeteil bereits an einer Kraftfahrzeugkarosserie fest montiert. Das Aufnahmeteil weist nach oben offene Aussparungen auf. In diese sind mit Kabeln bestückte Zugentlastungen von oben her eingelegt und sodann mit einem Deckel verschlossen.

DE 199 59 185 A1 beschreibt eine Kabeltrageinheit, die alle Merkmale des Oberbegriffes von Anspruch 1 aufweist. Weitere Kabeltrageinheiten sind bekannt geworden aus DE 21 09 548 A, DE 10 2008 028 278 A1, US 2003/0178787 A1 und DE 10 2007 060 100 A1. Die letztgenannte Schrift offenbart Kabelhalter, die an einem Rahmen befestigt werden, nachdem die Kabel in den Kabelhalter eingeführt sind.

Bei allen vorbekannten Ausführungsformen ist das Fixieren der Kabel in der Kabeltrageinheit problematisch, weil mit Aufwand verbunden, und zwar bezüglich der Herstellung, als auch beim Fixieren der Kabel.

Der Erfindung liegt die Aufgabe zugrunde, eine Kabeltrageinheit zu schaffen, die sich leicht, schnell und zuverlässig fertigen lässt. Insbesondere soll das Fixieren der Kabel in der Kabeltrageinheit einfach, leicht und zuverlässig durchführbar sein. Insbesondere soll die Kabeltrageinheit außer Haus herstellbar sein. Es soll somit möglich sein, die komplette Kabeltrageinheit oder Untergruppen hiervon an verschiedenen Orten herstellen zu lassen, und sie sodann an einem anderen - zentralen - Ort fertig zu montieren.

Diese Aufgabe wird mittels einer Kabeltrageinheit gemäß Anspruch 1 gelöst.

Der Erfinder ist dabei von an sich bekannten Elementen ausgegangen. Er verwendet einen Kabelhalter, der aus elastisch verformbaren Material besteht, und der eine Anzahl von Membranen umfasst, die von Kabeln durchstoßbar sind. Der Kabelhalter ist im Allgemeinen plattenförmig.

Weitere Elemente sind Rahmenteile, die im Lose-Zustand lose einander zugeordnet, und im Betriebszustand fest miteinander verbunden sind. Wenigstens ein Rahmenteil weist eine Aufnahmeöffnung zum Aufnehmen des Kabelhalters auf. Ferner sind Kabelhalter und Rahmenteil beziehungsweise Rahmenteile derart gestaltet, dass der Kabelhalter in die Aufnahmeöffnung einsteckbar und in eingestecktem Zustand kraftschlüssig unverlierbar gehalten ist.

Der große Vorteil der Erfindung liegt in Folgendem:

Zunächst kann der Kabelhalter mit Kabeln bestückt werden. Dabei ist jedes Kabel in der durchstoßenen, elastischen Membran zuverlässig und unverlierbar gehalten. Der genannte Schritt des Bestückens des Kabelhalters mit Kabeln kann somit an irgendeinem, von der Zentrale fernen Ort durchgeführt werden. Die bestückten Kabelhalter können sodann zur Zentrale gesandt werden, ohne dass die Gefahr des Lösens der Kabel aus dem Kabelhalter besteht.

Auch der weitere Fertigungsschritt, nämlich das Bestücken der Rahmenteile mit den bestückten Kabelhaltern, kann an irgendeinem weiteren Ort vorgenommen werden. Auch nach diesem zweiten Fertigungsschritt kann die komplette Baugruppe, umfassend die bestückten Kabelhalter sowie die mit den Kabelhaltern bestückten Rahmenteile, unbesorgt versandt werden; ein Lösen ist nicht zu befürchten.

Mit der Erfindung ist es somit möglich, unterschiedliche, räumlich voneinander entfernte Montagebetriebe zu verwenden, sodass sich Standortvorteile unterschiedlicher Betriebe in vorteilhafter Weise ausnutzen lassen.

Die Erfindung ist anhand der Zeichnung näher erläutert. Darin ist im Einzelnen Folgendes dargestellt:
- Figur 1: zeigt in Draufsicht eine erste Ausführungsform einer Kabeltrageinheit mit Kabeln, teilweise montiert.
- Figur 2: zeigt den Gegenstand von Figur 1 in perspektivischer Ansicht.
- Figur 3: zeigt in Draufsicht eine zweite Ausführungsform einer Kabeltrageinheit im montierten Zustand.
- Figur 4: zeigt den Gegenstand von Figur 3 in Draufsicht.
- Figur 5: zeigt in perspektivischer Ansicht eine dritte Ausführungsform einer montierten Kabeltrageinheit.
- Figur 6: zeigt den Gegenstand von Figur 5 ebenfalls in perspektivischer Ansicht, jedoch gegenüber Figur 5 verdreht.

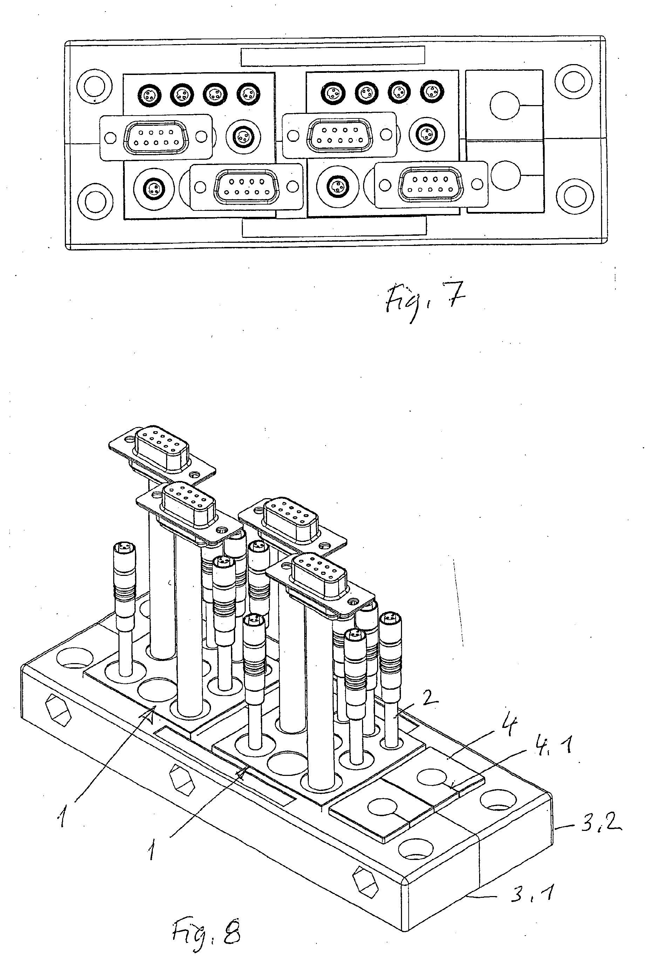

- Figur 7: zeigt in Draufsicht eine vierte Ausführungsform einer Kabeltrageinheit im montierten Zustand.
- Figur 8: zeigt den Gegenstand von Figur 7 in perspektivischer Darstellung.
- Fig. 9 und 10: zeigen in perspektivischen Darstellungen einen mit Kabeln bestückten Kabelhalter.

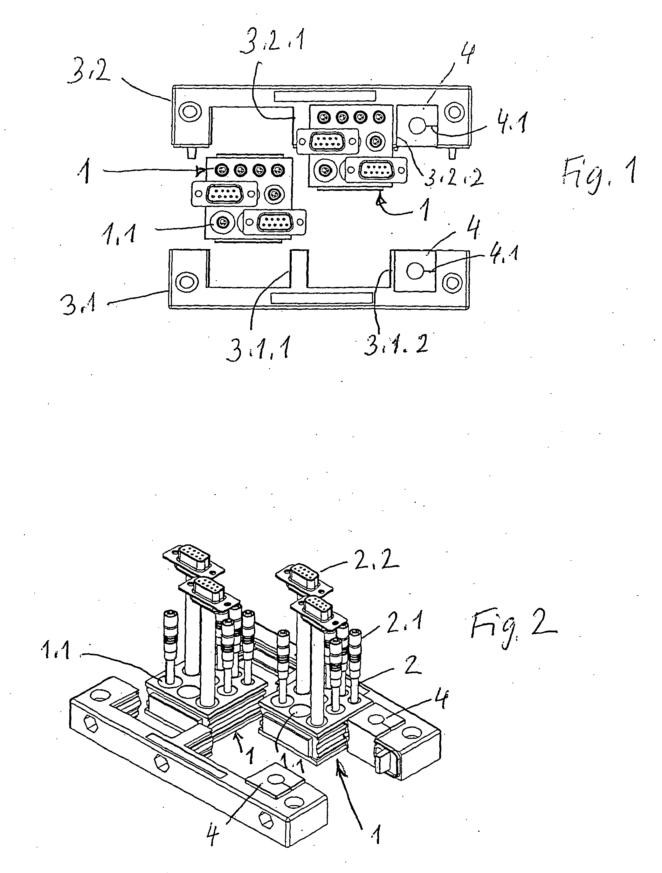

In den Figuren 1 und 2 erkennt man je zwei Kabelhalter 1. Die Kabelhalter sind plattenförmig. In Draufsicht gesehen sind sie quadratisch oder annähernd quadratisch.

Jeder Kabelhalter umfasst eine Anzahl von Membranen 1.1. Einige der Membrane 1.1 sind mit Kabeln 2 bestückt. Die Kabel 2 sind durch die Membrane 1.1 hindurchgestoßen, sodass sie auch auf der Unterseite des betreffenden Kabelhalters 1 erscheinen, hier nicht erkennbar. Die Kabel 2 haben runde Stecker 2.1 beziehungsweise Rechteckstecker 2.2.

Man erkennt ferner Rahmenteile 3.1, 3.2. Jedes Rahmenteil weist Stege aufsiehe die Stege 3.1.1, 3.1.2 sowie 3.2.1, 3.2.2. Durch die Stege weisen die Rahmenteile 3.1 und 3.2 Aufnahmeöffnungen auf. In diese sind die Kabelhalter 1 schubladenartig einsteckbar. Wenigstens eines der beiden Bauteile - Kabelhalter 1 und Rahmenteil 3.1 beziehungsweise 3.2 - ist aus gummielastischem Material hergestellt. Im Allgemeinen besteht Kabelhalter 1 aus einem solchen Material, während Rahmenteil 3.1 beziehungsweise 3.2 aus Metall oder aus Kunststoff besteht. In eingeschobenem Zustand sind die Kabelhalter 1 aufgrund einer Klemmwirkung in der betreffenden Aufnahmeöffnung zuverlässig und unverlierbar gehalten.

Auch sind die Kabel 2 in den Kabelhaltern 1 nach dem Durchstoßen der Membrane 1.1 zuverlässig gehalten. Sie können somit nicht herausfallen, auch nicht beim Transport.

Die mit Kabeln 2 bestückten Kabelhalter 1 stellen somit eine eigenständige Baueinheit dar. Durch Montieren mit den Rahmenteilen 3.1, 3.2, das heißt durch Einstecken in deren Aufnahmeöffnungen, und durch Schließen der Rahmenteile 3.1, 3.2 wird die Kabeltrageinheit komplett montiert.

Die erste Ausführungsform gemäß der Figuren 1 und 2 weist eine Besonderheit auf. Die Rahmenteile 3.1 und 3.2 enthalten nämlich jeweils eine Tülle 4. Diese besteht aus gummielastischem oder ähnlichem Material. Sie ist derart gestaltet, dass sie in eine Aufnahmeöffnung passt, gebildet aus einem entsprechenden Steg 3.1.2 beziehungsweise 3.2.2 und dem betreffenden Rahmenteil 3.1 beziehungsweise 3.2. Die Tülle weist eine Bohrung auf. Deren lichte Weite ist gleich groß oder etwas kleiner, als der Durchmesser eines hierfür bestimmten Kabels 2 (nicht dargestellt). Die Tülle 4 weist einen Schlitz 4.1 auf. Dieser ermöglicht es, die Tülle aufzuweiten und das Kabel in die Bohrung einzuführen.

Die Tüllen 4 sind ebenfalls schubladenartig in die betreffenden Aufnahmeöffnungen einsteckbar, und nach dem Einstecken unverlierbar.

Man beachte, dass es auch völlig ohne Stege geht. So ist es denkbar, zwei oder mehrere Kabelhalter 1 in eine einzige Aufnahmeöffnung einzuschieben. Einander benachbarte Kabelhalter liegen in diesem Falle eng und stramm aneinander an, sodass sie klemmend in der Aufnahmeöffnung sitzen, wiederum unverlierbar. Gleiches gilt natürlich auch für die Anzahl der Tüllen innerhalb einer Aufnahmeöffnung.

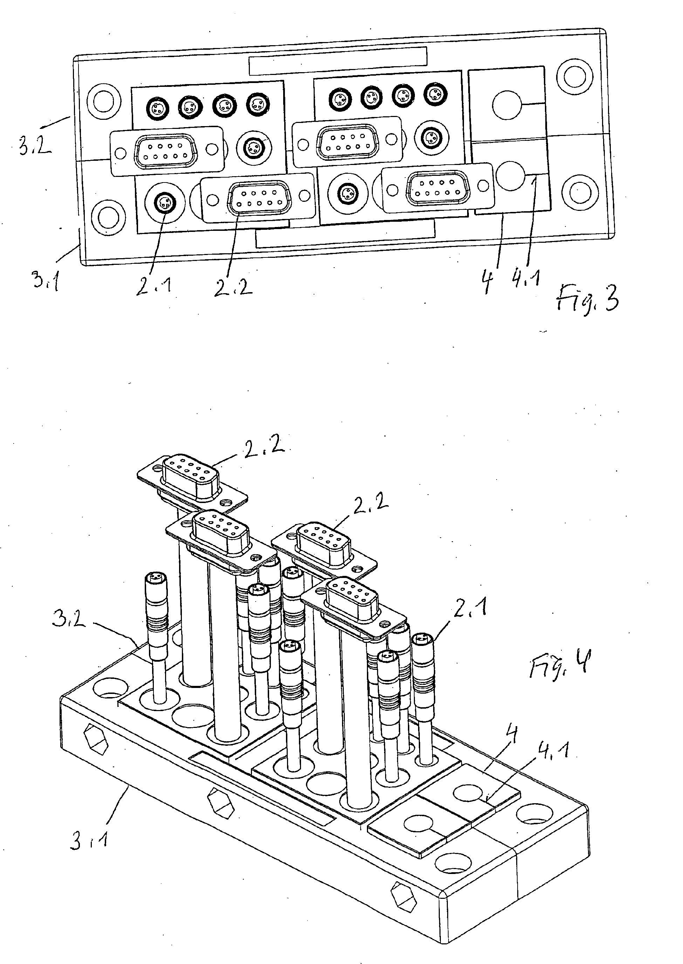

Bei der zweiten Ausführungsform gemäß der Figuren 3 und 4 ist die Kabeltrageinheit komplett montiert.

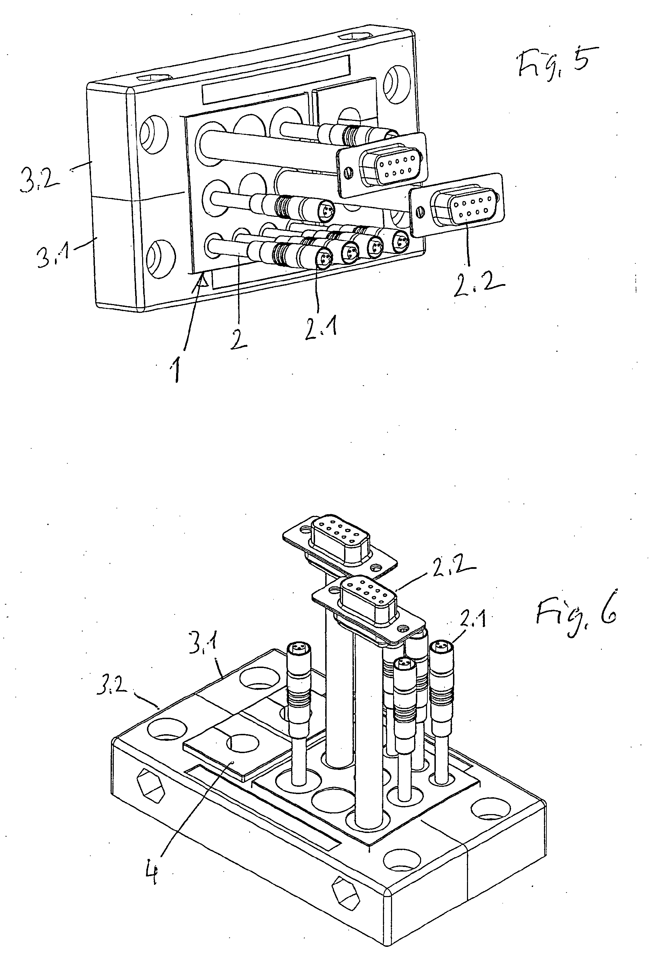

Die dritte Ausführungsform gemäß der Figuren 5 und 6 umfasst nur einen einzigen Kabelhalter 1, aber wieder zwei Tüllen 4.

Die vierte Ausführungsform umfasst zwei Kabelhalter 1 und zwei Tüllen 4.

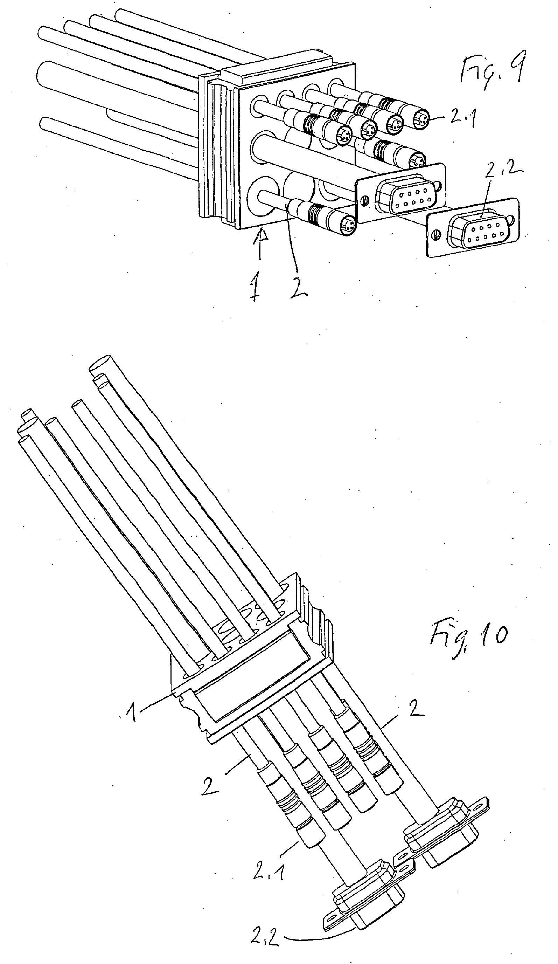

Die Figuren 9 und 10 zeigen einen einzigen Kabelhalter 1. Dieser ist mit mehreren Kabeln 2 bestückt, einige mit rundem Stecker 2.1, und zwei mit rechteckigem Stecker 2.2.

Wie man aus den Figuren 1 und 9 erkennt, weisen die Kabelhalter 1 an wenigstens zwei Schmalseiten Rillen auf, die ein formschlüssiges Halten der Kabelhalter 1 in eingestecktem Zustand bewirken. Gleiches gilt für die Tüllen 4.

Die Erfindung lässt sich stationär wie auch mobil anwenden, somit zum Beispiel für Schaltschränke, als auch für Kraftfahrzeuge.

### Bezugszeichenliste

- 1: Kabelhalter
- 1.1: Membran
- 2: Kabel
- 2.1: runder Kabelstecker
- 2.2: eckiger Kabelstecker
- 3.1: Rahmenteil
- 3.2: Rahmenteil
- 3.1.1: Steg
- 3.1.2: Steg
- 3.2.1: Steg
- 3.2.2: Steg
- 4: Tülle
- 4.1: Schlitz

## Patentansprüche

1. Kabeltrageinheit mit den folgenden Bauteilen beziehungsweise Merkmalen:
1.1 wenigstens einen elastisch verformbaren Kabelhalter (1), umfassend eine Anzahl von Membranen (1.1), die von Kabeln (2) durchstoßbar sind;
1.2 im Betriebszustand ist der Kabelhalter (1) mit Kabeln (2) bestückt;
1.3 mit wenigstens zwei Rahmenteilen (3.1, 3.2), die im Lose-Zustand lose einander zugeordnet, und im Betriebszustand fest miteinander verbunden sind;
1.4 wenigstens ein Rahmenteil (3.1, 3.2) weist eine Aufnahmeöffnung zum Aufnehmen des Kabelhalters (1) auf;
1.5 im Betriebszustand ist der bestückte Kabelhalter (1) in der Aufnahmeöffnung fest und dicht eingespannt;
1.6 im Lose-Zustand ist der bestückte Kabelhalter (1) in die Aufnahmeöffnung schubladenartig einsteckbar, und in eingestecktem Zustand kraftschlüssig unverlierbar gehalten;
**gekennzeichnet durch** die folgenden Merkmale:
1.7 der Kabelhalter (1) weist eine Anzahl von Membranen (1.1) auf, die von Kabeln (2) durchstoßbar sind und die Kabel (2) nach deren Durchstoßen der Membranen (1.1) unverlierbar halten.

2. Kabeltrageinheit nach Anspruch 1, **dadurch gekennzeichnet, dass** die Rahmenteile (3.1, 3.2) Tüllen (4) zur Zugentlastung enthalten.

3. Kabeltrageinheit nach einem der Ansprüche 1 bis 3, **dadurch gekennzeichnet, dass** die Rahmenteile (3.1, 3.2) Stege (3.1.1, 3.2.1, 3.1.2, 3.2.2) zum Bilden der Aufnahmeöffnungen aufweisen.

4. Kabeltrageinheit nach einem der Ansprüche 1 bis 3, **dadurch gekennzeichnet, dass** beide Rahmenteile (3.1, 3.2) Aufnahmeöffnungen aufweisen.

5. Kabeltrageinheit nach einem der Ansprüche 1 bis 3, **dadurch gekennzeichnet, dass** nur ein Rahmenteil Aufnahmeöffnungen aufweist, und das andere Rahmenteil als gradliniger Stab ausgebildet ist.
